# DEMANDE DE BREVET EUROPEEN

(11) **EP 3 486 507 A1**
(43) Date de publication de la demande: **22.05.2019**
(21) Numéro de dépôt: 17202449.9
(22) Date de dépôt: 17.11.2017
(51) Int. Cl.: F16C 1/14, F16C 1/22

(54) **EMBOUT D'ACCOUPLEMENT D'UN CABLE DE COMMANDE D'UNE BOITE DE VITESSE À UNE ROTULE**

(71) Demandeur: DURA Automotive Holdings U.K., Ltd., Birmingham, B35 7AG (GB)
(72) Inventeur: BIAGGINI, Jean-Marie, 78640 NEAUPHLE LE VIEUX (FR)
(74) Mandataire: Cabinet Laurent & Charras

(57) **Abrégé**

L'invention concerne un embout d'accouplement (1) d'un câble (2) de commande d'une boîte de vitesses d'un véhicule automobile à une rotule d'une partie d'un levier de vitesses ou d'une partie de la boîte de vitesses, l'embout (1) étant destiné à surmonter le câble (2) et comprend une fenêtre radiale (3) apte à recevoir en engagement un bouchon (4) présentant une portion interne filetée, le bouchon (4) étant apte à passer d'une position désengagée à une position engagée dans laquelle il coopère avec une portion d'extrémité filetée du câble (2) et verrouille ledit câble (2) en position.

Selon l'invention l'embout (1) comprend une portion annulaire d'extrémité (9), coaxiale au câble (2), et recevant une bague de sécurité (8), ladite bague de sécurité (8) étant apte à passer d'une position de déverrouillage à une position de verrouillage dans laquelle elle empêche soit l'engagement soit le désengagement du bouchon (4).

## Description

### DOMAINE TECHNIQUE

L'invention se rattache au secteur technique des équipements pour véhicules automobiles.

Plus particulièrement, l'invention concerne l'accouplement des câbles de commande d'une boîte de vitesses à une rotule que présente une partie d'un levier de vitesses d'une part, ou que présente une partie de la boîte de vitesses d'autre part. Les câbles de commande sont notamment affectés à la sélection et/ou au passage des vitesses.

### ART ANTERIEUR

Il est connu de l'état de la technique un embout d'accouplement comprenant un logement recevant une pièce d'accouplement destinée à venir coiffer et s'accoupler avec ladite rotule. La boîte de vitesse peut être une boîte manuelle ou une boîte automatique.

De façon connue, l'embout d'accouplement est destiné à surmonter l'extrémité du câble. Ainsi, le câble est inséré à l'intérieur de l'embout selon une certaine longueur d'engagement, et est immobilisé par rapport à l'embout pendant l'utilisation du véhicule. En pratique, un réglage préalable de la longueur d'engagement est nécessaire pour s'adapter aux différentes configurations des véhicules. Ensuite, au cours de la vie de l'embout d'accouplement, et du fait de l'usure et l'augmentation des jeux entre ses composants, le réglage de la longueur d'engagement du câble peut être répété pour assurer un contrôle précis de la sélection et/ou du passage des vitesses.

A cet effet, il est connu de l'état de la technique un embout d'accouplement comprenant un dispositif de verrouillage et de déverrouillage du câble, à des fins de réglage de sa longueur d'engagement dans l'embout. Un tel embout d'accouplement est par exemple divulgué par le document US 7,779,720. L'embout décrit dans ce document comprend une fenêtre radiale apte à recevoir en engagement un bouchon présentant une portion interne filetée. Le bouchon est apte à passer d'une position désengagée à une position engagée dans laquelle il coopère avec une portion d'extrémité filetée du câble, et verrouille ledit câble en position.

Ainsi, avant installation de l'embout d'accouplement dans le véhicule, et par exemple pendant la livraison ou la manutention dudit câble équipé de l'embout, le bouchon est maintenu en position désengagée par un élément de sécurité sous forme d'un curseur pourvu d'un ergot apte à être déplacé axialement pour verrouiller le bouchon dans une position désengagée. De cette manière, le verrouillage du câble est effectué en atelier par un opérateur selon la longueur d'engagement souhaitée. Le bouchon comprend, quant à lui, des languettes élastiques équipées d'ergots coopérant avec des rainures ménagées sur l'embout pour le maintien du bouchon en position engagée.

Ce type d'embout d'accouplement présente généralement l'inconvénient que sa manipulation est difficile. En effet, lors de l'installation de l'embout, et lorsqu'il convient de régler la longueur d'engagement du câble par rapport à l'embout, l'espace limité présent autour de la boîte de vitesses rend difficile l'accès et la manipulation du bouchon d'engagement et du curseur de sécurité. D'autant plus que pour désengager le bouchon, l'utilisation d'un outil type tournevis semble nécessaire pour déverrouiller les ergots du curseur et des languettes.

### EXPOSE DE L'INVENTION

L'un des buts de l'invention est donc de proposer un embout d'accouplement d'un câble de commande d'une boîte de vitesses, ajustable, pouvant être verrouillé ou déverrouillé sur le câble par pression d'un bouchon, et permettant d'assurer une fonction dite de livraison dans laquelle le verrouillage du câble est empêché, et une fonction dite opérationnelle dans laquelle le désengagement du bouchon est empêché.

Un autre objectif de l'invention est également de fournir une information visuelle du bon verrouillage du câble.

Un autre objectif est de fournir un tel embout d'accouplement dont les moyens permettant d'empêcher l'engagement ou le désengagement du bouchon sont faciles à manipuler, particulièrement dans des espaces peu visibles et difficiles d'accès.

Un autre objectif de l'invention est de sécuriser le bouchon dans une position engagée et désengagée, de façon simple et fiable, sans nécessité d'utiliser de pièce complémentaire ni d'outil.

Afin de résoudre les problèmes précités, il a été mis au point un embout d'accouplement d'un câble de commande d'une boîte de vitesses d'un véhicule automobile à une rotule d'une partie d'un levier de vitesses ou d'une partie de la boîte de vitesses. L'embout est destiné à surmonter le câble et comprend une fenêtre radiale apte à recevoir en engagement un bouchon présentant une portion interne filetée, le bouchon étant apte à passer d'une position désengagée à une position engagée dans laquelle il coopère avec une portion d'extrémité filetée du câble et verrouille ledit câble en position.

Selon l'invention, l'embout comprend une portion annulaire d'extrémité, coaxiale au câble, et recevant une bague de sécurité. La bague de sécurité est apte à passer d'une position de déverrouillage à une position de verrouillage dans laquelle elle empêche soit l'engagement soit le désengagement du bouchon.

De cette manière, la bague permet d'assurer une fonction dite de livraison dans laquelle le verrouillage du câble est empêché, et une fonction dite opérationnelle dans laquelle le désengagement du bouchon est empêché. La manipulation de la bague est facile et possible sans visibilité et dans des espaces difficiles d'accès. En atelier il suffit simplement d'ajuster la longueur d'engagement du câble dans l'embout d'accouplement, de passer la bague dans la position de déverrouillage pour permettre d'engager le bouchon, et de passer la bague dans la position de verrouillage pour empêcher le désengagement du bouchon.

De préférence, la portion annulaire comprend une rainure de verrouillage et une rainure de déverrouillage, et la bague comprend au moins un ergot élastique apte, dans un mouvement de coulissement de la bague, à venir s'engager :
- dans la rainure de verrouillage pour verrouiller la bague dans la position de verrouillage ou;
- dans la rainure de déverrouillage pour verrouiller la bague dans la position de déverrouillage.

Ainsi, le fonctionnement est simple et fiable. La bague peut être verrouillée dans une position dans laquelle elle empêche l'engagement ou le désengagement du bouchon, ou dans une position neutre dans laquelle elle permet le déplacement du bouchon dans la position engagée ou désengagée.

Avantageusement, le désengagement de l'ergot élastique s'effectue par pression transversale sur la bague.

Selon une forme de réalisation particulière, la bague comprend une broche s'étendant axialement et destinée, lorsque la bague est dans la position de verrouillage, à venir soit :
- s'intercaler entre le bouchon et la fenêtre pour empêcher l'engagement du bouchon ;
- se positionner sur le bouchon pour empêcher le désengagement du bouchon.

De cette manière le bouchon peut être soit être libre à se déplacer entre la position engagée et la position désengagée, soit être bloqué dans une de ces positions. Ainsi le bouchon peut assumer une position dite de livraison (désengagée) ou d'exploitation (engagée) et y être bloqué de façon sûre et simple. Le fait qu'en position de verrouillage de la bague, la broche vienne se positionner sur le bouchon permet de fournir une information visuelle du bon engagement du bouchon. En effet, la bague ne peut se déplacer en position de verrouillage pour bloquer le bouchon dans la position engagée, que si le bouchon est correctement engagé.

De préférence, la bague et la portion annulaire coaxiale comprennent des moyens de retenus complémentaires, par exemple sous la forme d'un assemblage quart de tour. De cette manière, la bague est maintenue sur l'embout et ne risque pas de se perdre. La manipulation de la bague est simple.

### BREVE DESCRIPTION DES DESSINS

D'autres caractéristiques et avantages de l'invention ressortiront clairement de la description qui en est réalisée ci-après, à titre indicatif et nullement limitatif, en référence aux figures annexées, dans lesquelles :
- la figure 1 est une représentation en vue éclatée de l'embout d'accouplement selon l'invention ;
- la figure 2 est une représentation schématique en perspective de l'embout selon l'invention avec le bouchon en position désengagée et la bague en position de verrouillage ;
- la figure 3 est une représentation schématique en perspective de l'embout selon l'invention avec le bouchon en position engagée et la bague en position de verrouillage ;
- la figure 4 est une vue en coupe longitudinale correspondant à la figure 2, avec le bouchon en position désengagée et la bague en position de verrouillage ;
- la figure 5 est une vue en coupe longitudinale de l'embout selon l'invention avec le bouchon en position désengagée et la bague en position de déverrouillage ;
- la figure 6 est une vue en coupe longitudinale correspondant à la figure 3, avec le bouchon en position engagée et la bague en position de verrouillage.

### EXPOSE DETAILLE DE L'INVENTION

L'invention concerne un embout d'accouplement (1) d'un câble (2) de commande d'une boîte de vitesses d'un véhicule automobile à une rotule d'une partie d'un levier de vitesses ou d'une partie de la boîte de vitesses.

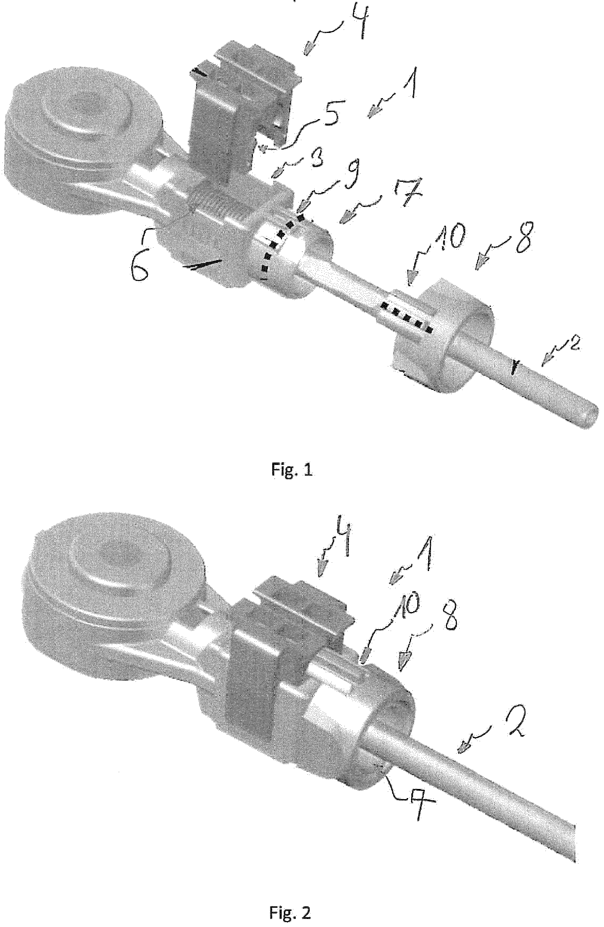

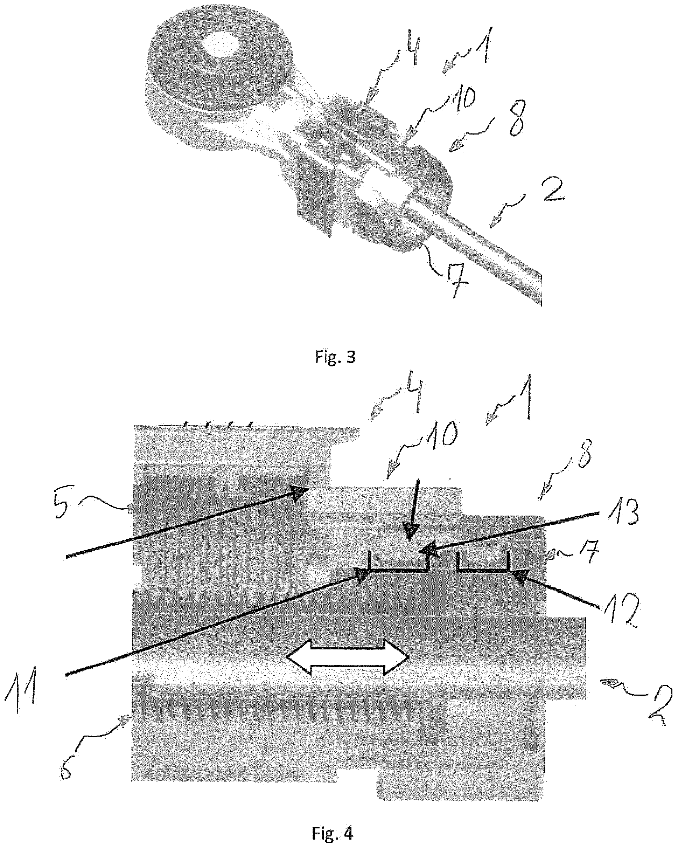

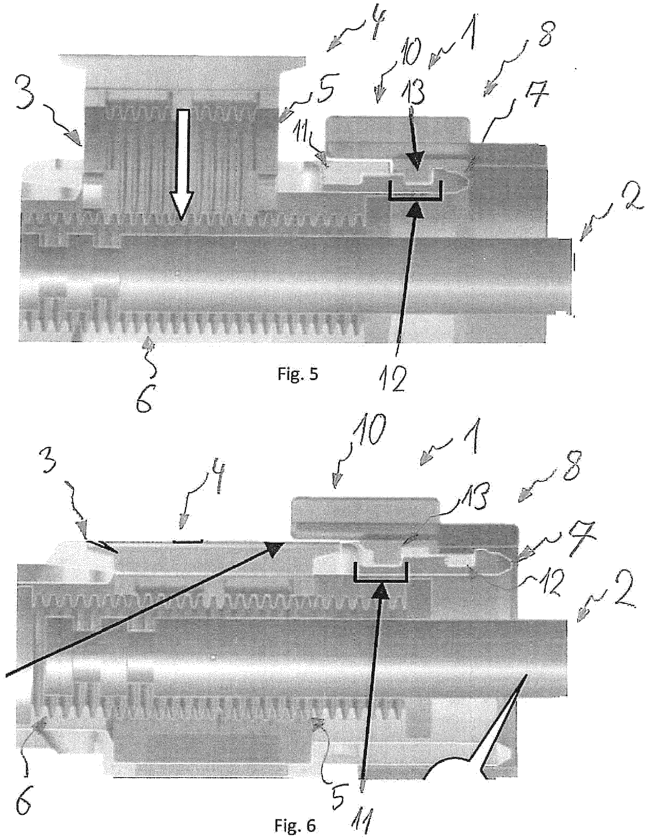

L'embout (1) est destiné à surmonter le câble (2) et comprend une fenêtre radiale (3) apte à recevoir en engagement un bouchon (4) présentant une portion interne filetée (5). Le bouchon (4) présente un profil en U ouvert vers le câble (2) et est apte à passer d'une position désengagée, représentée sur les figures 2, 4 et 5, à une position engagée, représentée sur les figures 3 et 6, dans laquelle il coopère avec une portion d'extrémité filetée (6) du câble (2) et verrouille ledit câble (2) en position.

Bien entendu, d'autres conformations du bouchon (4), tels que des dents ou autres formes géométriques complémentaires peuvent être utilisées pour verrouiller le câble (2).

Selon l'invention, l'embout (1) comprend une portion annulaire d'extrémité (7), coaxiale au câble (2), et recevant une bague de sécurité (8).

La bague de sécurité (8) est apte à passer d'une position de déverrouillage à une position de verrouillage dans laquelle elle empêche soit l'engagement soit le désengagement du bouchon (4). La bague (8) est fixée à l'embout (1) par un assemblage quart de tour. L'embout (1) comprend également une rainure axiale (9) apte à coopérer avec la bague (8). Ainsi la bague (8) peut se déplacer axialement entre les deux positions sans risque de détachement accidentel. De cette façon sa manipulation est facilitée.

La bague (8) comprend une broche (10) s'étendant axialement. La broche (10), lorsque la bague (8) est dans la position de verrouillage, est apte à s'intercaler entre le bouchon (4) et la fenêtre (3) pour empêcher l'engagement du bouchon (4), comme illustré sur les figures 2 et 4. Avantageusement, le bouchon (4) comprend un alésage (4a) dans laquelle la broche (10) pénètre. Cette position correspond à la position dite de livraison dans laquelle le câble (2) est libre à se déplacer, afin que le verrouillage du câble soit bien effectué volontairement par un opérateur en atelier.

La broche (10) est également apte à se positionner sur le bouchon (4) pour empêcher le désengagement du bouchon (4), comme illustré sur les figures 3 et 6. Cette position correspond à la position d'exploitation, une fois le câble installé dans le véhicule. Le fait qu'en position de verrouillage de la bague (8), la broche (10) vienne se positionner sur le bouchon (4) permet de fournir une information visuelle du bon engagement du bouchon (4), puisque la bague (8) ne peut se déplacer en position de verrouillage pour bloquer le bouchon (4) dans la position engagée, que si le bouchon (4) est correctement engagé.

La portion annulaire (7) de l'embout (1) comprend deux rainures transversales, à savoir une rainure de verrouillage (11) et une rainure de déverrouillage (12). Les rainures (11, 12) peuvent être annulaires, c'est-à-dire disposées autour la totalité de circonférence. Elles peuvent être également disposées sur seulement une partie de la circonférence. D'autres conformations sont possibles sans sortir de cadre de l'invention.

La bague (8) comprend au moins un ergot élastique (13) s'entendant radialement vers le câble (2). La bague (8) peut comprendre deux ergots (13), diamétralement opposés, dans le cas où les rainures (11, 12) sont annulaires. L'ergot élastique (13) est conçu pour s'engager au repos soit dans la rainure de déverrouillage (12) soit dans la rainure de verrouillage (11).

La bague (8) est conçue pour que l'ergot élastique (13) se désengage des rainures (11, 12) lorsqu'une force radiale est exercée sur la circonférence de la bague (8). De préférence, à cette fin, la bague (8) peut être élastique et/ou présenter une section transversale non circulaire par exemple ovale. Selon un autre mode de réalisation non représentée, l'ergot élastique (13) peut être monté à l'extrémité d'une languette montée pivotante autour d'une charnière, de sorte qu'une pression sur l'extrémité opposée de la languette provoque l'écartement de l'ergot (13) et son désengagement.

Ainsi, au repos l'ergot élastique (13) est rapproché de l'axe du câble (2). Lorsqu'une pression radiale est appliquée sur la bague (8), les parties latérales de la bague (8) s'approchent de l'axe du câble (2), tandis que l'ergot (10) s'écarte du câble (2) et se désengage de la rainure (11, 12).

En alternative, la bague (8) peut présenter en coupe longitudinal une forme tronconique. Selon cette mode de réalisation, non représentée, l'ergot (13) s'entend de la partie présentant le plus petit diamètre au repos. Lorsque qu'une pression radiale est exercée sur la partie présentant le diamètre plus important au repos, l'ergot (13) s'écarte de la rainure (11, 12).

De ce qui précède, lors su fonctionnement de l'embout d'accouplement (1) selon l'invention, la bague (8) est assemblée avec la portion annulaire de l'embout (1) par une rotation de quart de tour. Le bouchon (4) est initialement en position désengagée, permettant au câble (2) de se déplacer librement. Pour sécuriser le bouchon (4) dans cette position, par exemple pendant la livraison du câble (2), la bague (8) est déplacée axialement vers le bouchon (4). Un effort radial est exercé sur la bague (8) pour écarter l'ergot (13) de la rainure (12), afin de pouvoir déplacer la bague et venir engager dans l'ergot (13) dans la rainure de verrouillage (11). Dans cette position, la broche (10) de la bague (8) s'intercale entre le bouchon (4) et la fenêtre radiale (3). Ainsi le bouchon (4) est bloqué en position désengagée par la bague (8) dans la position de verrouillage.

Lorsque l'engagement du câble est réglé, un effort radial est exercé sur la bague (8). L'ergot élastique (13) se désengage de la rainure de verrouillage (11). La bague (8) est déplacée axialement pour s'écarter du bouchon (4) jusqu'à ce que l'ergot vienne s'engager dans la rainure (12) de déverrouillage correspondant à la position de déverrouillage de la bague. Le bouchon (4) n'est plus bloqué et peut être engagé dans la fenêtre radiale (3) pour coopérer avec la portion d'extrémité filetée (6) du câble (2). La bague (8) peut ensuite retourner dans la position de verrouillage. Le retour de la bague (8) en position de verrouillage n'est possible que si le bouchon (4) et correctement engagé, sans quoi le déplacement axial de la bague (8) vers le bouchon (4) est impossible. Ainsi l'invention permet à contrôler facilement si les opérations précédentes ont été bien exécutées. Si le bouchon (4) a été correctement engagé, la broche (10) peut coulisser sur le bouchon (4). L'ergot élastique (13) s'engage dans la rainure de verrouillage (11), pour verrouiller la bague (8) et empêcher le désengagement du bouchon (4). L'embout (1) est sécurisé contre le désengagement intempestif et le contrôle de la boîte de vitesse est réalisé d'une façon sure.

Ainsi, il ressort de la description que l'embout d'accouplement (1) selon l'invention est facile à manipuler, particulièrement dans des espaces limités et avec une visibilité de l'embout (1) limitée. L'embout (1) permet également de sécuriser le bouchon (4) dans une position engagée et désengagée, de façon simple et sur, sans la nécessité d'utiliser de pièces complémentaires.

## Revendications

1. Embout d'accouplement (1) d'un câble (2) de commande d'une boîte de vitesses d'un véhicule automobile à une rotule d'une partie d'un levier de vitesses ou d'une partie de la boîte de vitesses, l'embout (1) étant destiné à surmonter le câble (2) et comprend une fenêtre radiale (3) apte à recevoir en engagement un bouchon (4) présentant une portion interne filetée, le bouchon (4) étant apte à passer d'une position désengagée à une position engagée dans laquelle il coopère avec une portion d'extrémité filetée du câble (2) et verrouille ledit câble (2) en position, ***caractérisé* en ce qu'**il comprend une portion annulaire d'extrémité (9), coaxiale au câble (2), et recevant une bague de sécurité (8), ladite bague de sécurité (8) étant apte à passer d'une position de déverrouillage à une position de verrouillage dans laquelle elle empêche soit l'engagement soit le désengagement du bouchon (4).

2. Embout d'accouplement (1) selon la revendication 1, ***caractérisé* en ce que** la portion annulaire comprend une rainure de verrouillage (11) et une rainure de déverrouillage (12), et la bague (8) comprend au moins un ergot élastique (13) apte, dans un mouvement de coulissement de la bague (8), à venir s'engager :
- dans la rainure de verrouillage (11) pour verrouiller la bague (8) dans la position de verrouillage ou ;
- dans la rainure de déverrouillage (12) pour verrouiller la bague (8) dans la position de déverrouillage.

3. Embout d'accouplement (1) selon la revendication 1, ***caractérisé* en ce que** le désengagement de l'ergot élastique (13) s'effectue par pression transversale sur la bague (8).

4. Embout d'accouplement (1) selon la revendication 2, ***caractérisé* en ce que** la bague (8) comprend une broche (10) s'étendant axialement et destinée, lorsque la bague (8) est dans la position de verrouillage, à venir soit :
- s'intercaler entre le bouchon (4) et la fenêtre (3) pour empêcher l'engagement du bouchon (4) ;
- se positionner sur le bouchon (4) pour empêcher le désengagement du bouchon (4).

5. Embout d'accouplement (1) selon la revendication 1, ***caractérisé* en ce que** la bague (8) et la portion annulaire coaxiale (7) comprennent des moyens de retenus complémentaires.

6. Embout d'accouplement (1) selon la revendication 5, ***caractérisé* en ce que** les moyens de retenus complémentaires se présentent sous la forme d'un assemblage quart de tour.
